# EUROPEAN PATENT APPLICATION

(11) **EP 4 488 098 A1**
(43) Date of publication of application: **08.01.2025**
(21) Application number: 23184266.7
(22) Date of filing: 07.07.2023
(51) Int. Cl.: B60L 3/00, B60L 53/16

(54) **SYSTEM AND METHOD FOR HANDLING AUTHORIZATION TO ACCESS A CHARGING INLET OF A VEHICLE**

(71) Applicant: VOLVO TRUCK CORPORATION, 405 08 Göteborg (SE)
(72) Inventor: SYLVÈN, Martin, 436 39 Askim (SE)
(74) Representative: Valea AB

(57) **Abstract**

The present disclosure relates to a first computer system (103, 500) for handling authorization to access a charging inlet (108) of a vehicle (100). The first computer system (103, 500) comprises processing circuitry (502) configured to obtain, from a second computer system (105, 500), information indicating that the first computer system (103, 500) is authorized to access the charging inlet (108) of vehicle (100). The authorization has been obtained when the first computer system (103, 500) is within a predetermined distance of vehicle (100). The first computer system (103, 500) and the second computer system (105, 500) are configured to be connected to each other via a short-range communication link (113).

## Description

### TECHNICAL FIELD

The disclosure relates generally to a first computer system, a second computer system, a vehicle, a first computer-implemented method, a second computer-implemented method, a computer program product and a non-transitory computer-readable storage medium. In particular aspects, the disclosure relates to handling authorization to access a charging inlet of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For an at least partly electrically driven vehicle, the charge cord is locked to the vehicle during charging to avoid that charge cord is ejected and someone can get hurt and damage physical equipment during charging. It is also necessary to keep the charge cord locked to the charging inlet to avoid a person that is not authorized to remove the charge cord. If the charging cord is removed by an unauthorized person, the charging may be stopped before the vehicle is charged to the required State of Charge (SOC), and this may impact the vehicle's mission since it does not have the necessary SOC.

Today, it is cumbersome for a user to remove the charge cord from the charging inlet of a vehicle since user must first press an unlock button on an authentication device, e.g. a key-fob, for a long time to get authorized. Secondly, the user must press a stop button next to the charging inlet on the vehicle. In some vehicles, no authentication is necessary and the user only have to press the stop button next to the charging inlet on the vehicle. After that, the charging of the vehicle will stop, and the charge cord is unlocked and may be removed.

If the user does not have an authentication device for the vehicle, it is not possible to authorize unlocking of the charge cord. This may be the case for example if the charging fails and someone needs to remove the charge cord and insert it again. The physical authentication device or access to a vehicle computer application is necessary where it is possible to remotely authorize unlock. This authorization process is a manual process which takes time to perform.

In view of the above, there is a strive to develop further improved technology relating to authorization to access a charging inlet of a vehicle.

### SUMMARY

According to a first aspect of the disclosure, a first computer system for handling authorization to access a charging inlet of a vehicle is provided. The first computer system comprises processing circuitry configured to obtain, from a second computer system, information indicating that the first computer system is authorized to access the charging inlet of vehicle. The authorization is obtained when the first computer system is within a predetermined distance of vehicle. The first computer system and the second computer system are connected to each other via a short-range communication link.

The first aspect of the disclosure may seek to improve handling of authorization to access a charging inlet of a vehicle. A technical benefit may include that handling of authorization to access a charging inlet of a vehicle is improved. Since the authorization is obtained when the first computer system is within a predetermined distance of the vehicle, the authorization may be performed automatically and without any need for a user to press physical buttons on the vehicle. It may also enable authorization to access the charging inlet without having the need for having physical key or key-fob. There is no need for having a physical key or key-fob for obtaining authorization to access the charging inlet.

Optionally in some examples, including in at least one preferred example, the processing circuitry may be further configured to:
- detect, via the short-range communication link, that the first computer system is within the predetermined distance of vehicle; and
- when the first computer system detects that it is within the predetermined distance of the vehicle, provide a request for authorization for the first computer system to access the charging inlet, wherein the request is provided to the second computer system over the short-range communication link.

A technical benefit may include that a short-range communication link is cost efficient and easy to install and repair. The short-range communication link is power efficient.

Optionally in some examples, including in at least one preferred example, the request may be provided automatically when the first computer system detects that it is within a predetermined distance of the vehicle, and wherein the request is provided with or without user interaction.

A technical benefit may include that the request may be provided automatically without user interaction, which is an easy way of providing the request. With the possibility to provide the request with user interaction, it may be possible to enable user control of providing the request, i.e. providing the request maybe adapted to the user.

Optionally in some examples, including in at least one preferred example, the processing circuitry may be further configured to, when the authorization has been obtained, provide a trigger to unlock the charging inlet.

A technical benefit may include that the charging inlet is unlocked and the charging cord may be removed from the charging inlet.

Optionally in some examples, including in at least one preferred example, the request may comprise an identity (ID) of the first computer system.

A technical benefit may include that the ID of the first computer system enables the authorization may be easy to perform and that it may be reliable. The first computer system may have an already existing ID that may be used for other purposes, and this same ID may be used for the authorization. Thus, it may not be necessary to create a new and dedicated ID for the authorization.

Optionally in some examples, including in at least one preferred example, the obtained information may indicate that a user of the first computer system is authorized to access the charging inlet of vehicle.

A technical benefit may include that it may be ensured that the actual user that will remove the charging cord from the caring inlet is the one that is authorized. Thus, the authorization is reliable.

Optionally in some examples, including in at least one preferred example, the request may comprise a user ID of the user of the first computer system.

A technical benefit may include that the ID of the user enables the authorization to be easy to perform and that it may be reliable. The user may have an already existing ID that may be used for other purposes, and this same ID may be used for the authorization. Thus, it may not be necessary to create a new and dedicated ID for the authorization.

Optionally in some examples, including in at least one preferred example, the first computer system may be comprised in a User Equipment (UE).

A technical benefit may include that the UE is a device which a user often carries or has easy access to, for example in the form of a mobile phone, a tablet computer etc. There is no need for a new and dedicated device for handling the authorization.

According to a second aspect of the disclosure, a second computer system for handling authorization to access a charging inlet of a vehicle is provided. The second computer system comprises processing circuitry configured to:
- detect, via a short-range communication link, that a first computer system is within a predetermined distance of vehicle;
- when the first computer system is detected to be within the predetermined distance of the vehicle, determine if the first computer system is authorized to access the charging inlet; and
- when the first computer system is authorized, provide, to the first computer system, information indicating that the first computer system is authorized to access the charging inlet of the vehicle.

The second aspect of the disclosure may seek to improve handling of authorization to access a charging inlet of a vehicle. A technical benefit may include that handling of authorization to access a charging inlet of a vehicle is improved. Since the authorization is obtained when the first computer system is within a predetermined distance of the vehicle, the authorization may be performed automatically and without any need for a user to press physical buttons on the vehicle. The second computer system may be able to keep track of which computer system has been authorized to access the charging inlet.

Optionally in some examples, including in at least one preferred example, the first computer system may be authorized to access the charging inlet when it is on a predetermined list of authorized systems.

A technical benefit may include that using the predetermined list of authorized systems may enable the authorization to be performed quickly and that a result of the authorization is reliable.

Optionally in some examples, including in at least one preferred example, processing circuitry may be further configured to obtain a request for authorization for the first computer system to access the charging inlet. The request may be obtained from the first computer system over the short-range communication link.

A technical benefit may include that a short-range communication link is cost efficient and easy to install and repair. The short-range communication link is power efficient.

Optionally in some examples, including in at least one preferred example, the processing circuitry may be further configured to:
- obtain a trigger for unlocking the charging inlet, wherein the trigger is associated with the authorized computer system; and to
- trigger unlocking of the charging inlet when the trigger has been obtained.

A technical benefit may include that the charging inlet is unlocked, and the charging cord may be removed from the charging inlet.

Optionally in some examples, including in at least one preferred example, the request may comprise an ID of the first computer system.

A technical benefit may include that the ID of the user enables the authorization to be easy to perform and that it may be reliable. The user may have an already existing ID that may be used for other purposes, and this same ID may be used for the authorization. Thus, it may not be necessary to create a new and dedicated ID for the authorization.

Optionally in some examples, including in at least one preferred example, a user of the first computer system is authorized to access the charging inlet.

A technical benefit may include that it may be ensured that the actual user that will remove the charging cord from the caring inlet is the one that is authorized. Thus, the authorization is reliable.

Optionally in some examples, including in at least one preferred example, the request comprises a user ID of the user of the first computer system.

A technical benefit may include that the ID of the user enables the authorization to be easy to perform and that it may be reliable. The user may have an already existing ID that may be used for other purposes, and this same ID may be used for the authorization. Thus, it may not be necessary to create a new and dedicated ID for the authorization.

Optionally in some examples, including in at least one preferred example, the second computer system may be comprised in the vehicle.

A technical benefit may include that it is only the vehicle that authorizes a system to access the charging inlet. Thus, the vehicle itself has full control over who is authorized to access the charging inlet. Unauthorized access to the charging inlet is prevented.

According to a third aspect of the disclosure a vehicle is provided. The vehicle comprises the second computer system of the second aspect, a charging inlet and an actuator

Technical benefits of the third aspect of the disclosure are largely analogous to the technical benefits of the first aspect and the second aspect of the disclosure. It shall also be noted that all examples of the first aspect and the second aspect of the disclosure are applicable to and combinable with all examples of the third aspect of the disclosure, and vice versa.

According to a fourth aspect of the disclosure a first computer-implemented method for handling authorization to access a charging inlet of a vehicle is provided. The method comprises:
- obtaining, by a processing circuitry of a first computer system and from a second computer system, information indicating that the first computer system is authorized to access the charging inlet of vehicle,

wherein the authorization is obtained when the first computer system is within a predetermined distance of vehicle, and
wherein the first computer system and the second computer system are connected to each other via a short-range communication link.

Technical benefits of the fourth aspect of the disclosure are largely analogous to the technical benefits of the first aspect, second aspect and the third aspect of the disclosure. It shall also be noted that all examples of the first aspect, the second aspect and the third aspect of the disclosure are applicable to and combinable with all examples of the fourth aspect of the disclosure, and vice versa.

According to a fifth aspect of the disclosure a second computer-implemented method for handling authorization to access a charging inlet of a vehicle is provided. The method comprises:
- detecting, by a processing circuitry of a second computer system and via a short-range communication link, that a first computer system is within a predetermined distance of vehicle; and
- when the first computer system is detected to be within the predetermined distance of the vehicle, determining. by the processing circuitry, if the first computer system is authorized to access the charging inlet; and
- when the first computer system is determined to be authorized to access the charging inlet, providing, by the processing circuitry and to the first computer system, information indicating that the first computer system is authorized to access the charging inlet of the vehicle.

Technical benefits of the fifth aspect of the disclosure are largely analogous to the technical benefits of the first aspect, the second aspect, the third aspect and the fourth aspect of the disclosure. It shall also be noted that all examples of the first aspect, the second aspect, the third aspect and the fourth aspect of the disclosure are applicable to and combinable with all examples of the fifth aspect of the disclosure, and vice versa.

According to a sixth aspect of the disclosure, a computer program product comprising program code is provided. The computer program product is for performing, when executed by a processing circuitry, the method of the fourth aspect and/or the fifth aspect.

Technical benefits of the sixth aspect of the disclosure are largely analogous to the technical benefits of the first aspect, the second aspect, the third aspect, the fourth aspect and the fifth aspect of the disclosure. It shall also be noted that all examples of the first aspect, the second aspect, the third aspect, the fourth aspect and the fifth aspect of the disclosure are applicable to and combinable with all examples of the sixth aspect of the disclosure, and vice versa.

According to a seventh aspect of the disclosure, a non-transitory computer-readable storage medium is provided. The non-transitory computer-readable storage medium comprises instructions, which when executed by a processing circuitry, cause the processing circuitry to perform the method of the fourth aspect and/or the fifth aspect.

Technical benefits of the seventh aspect of the disclosure are largely analogous to the technical benefits of the first aspect, the second aspect, the third aspect, the fourth aspect, the fifth aspect and the sixth aspect of the disclosure. It shall also be noted that all examples of the first aspect, the second aspect, the third aspect, the fourth aspect, the fifth aspect and the sixth aspect of the disclosure are applicable to and combinable with all examples of the seventh aspect of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle according to an example.
**FIG. 2** is an exemplary signaling diagram illustrating a method according to an example.
**FIG. 3** is an exemplary flow chart illustrating a method according to an example.
**FIG. 4** is an exemplary flow chart illustrating a method according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

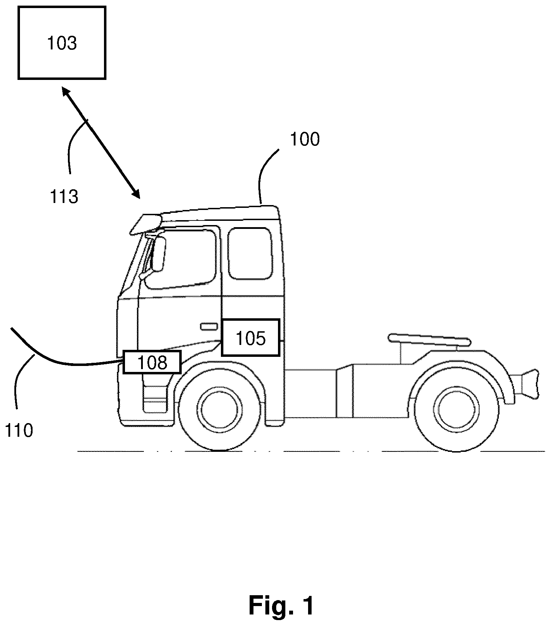

**FIG. 1** is an exemplary drawing illustrating a vehicle **100** according to an example. The vehicle **100** may be a heavy-duty vehicle, such as truck, bus, marine vessel or construction equipment, among other vehicle types. Although the disclosure may be described with respect to a particular vehicle, the disclosure is not restricted to any particular vehicle.

The vehicle **100** comprises a chargeable energy source used to drive the vehicle **100.** The vehicle **100** may be at least partly electrically driven, for example by means of a battery, a fuel cell or any other suitable chargeable energy source.

The vehicle **100** comprises a charging inlet **108** arranged to receive a charge cord **110.** In other words, the charge cord **110** is arranged to be connected to the charging inlet **108** when the vehicle **100** is to be charged. The charging inlet **108** may be referred to as a charge cord inlet, a charge connector, a charge cord connector etc. The charge cord **110** may be referred to as a charge cable.

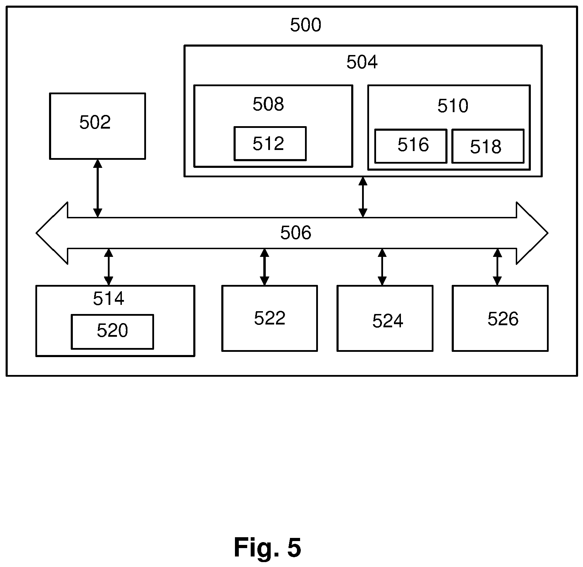

The vehicle **100** comprises a second computer system **105, 500.** The second computer system **105** comprises a processing circuitry **502.** Reference numbers 500 and 502 are shown in **FIG. 5****, which** will be described in detail later.

The vehicle **100** may or may not be comprised in a vehicle fleet. The vehicle fleet comprises multiple vehicles **100.** The vehicles comprised in the vehicle fleet may be at least partly controlled by a fleet manager system, and the fleet manager system may be an autonomous system, or it may be at least partly manually operated by a fleet manager.

**FIG. 1** shows a first computer system **103, 500** arranged to be connected to the vehicle **100,** e.g. the second computer system **105, 500** comprised in the vehicle **100.** The first computer system **103, 500** may be a User Equipment (UE) or it may be comprised in the UE. The UE may be a wireless communication device which may also be known as e.g., a wireless device, a mobile terminal, wireless terminal and/or mobile station, a mobile telephone, cellular telephone, or laptop with wireless capability, tablet computer just to mention some examples. The UE may be portable, pocket storable, handheld, computer comprised, mobile, stationary etc. The first computer system **103, 500** comprises a processing circuitry **502.**

The first communication system **103, 500** and the vehicle **100,** e.g. the second communication system **105, 500,** are arranged to communicate with each other via a short-range communication link **113.** The short-range communication link **113** is a wireless communication link. The short-range communication link **113** may be for example a Bluetooth Low Energy (BLE) communication link, a Bluetooth communication link, a Wi-Fi communication link, an Ultra-Wideband (UWB) communication link and a Near Field Communication (NFC) communication link etc. The short-range communication link **113** may be arranged to enable communication within a range below a range threshold.

In this disclosure, the first communication system **103, 500** and/or the user of the first communication system **103, 500** is automatically authorized to access the charging inlet **108** by identifying and authorizing the first communication system **103, 500** and/or the user of the first communication system **103, 500** over the short-range communication link **113.** As soon as the first communication system **103, 500** with short range access for a specific vehicle **100** is in reach to that vehicle **100,** the charging inlet **108** can be unlocked without any manual authorization.

Short range access to vehicle functions is used for other purposes as well, e.g. controlling parking climate from a smart phone instead of using panel in the vehicle **100.**

The access to the vehicle's functions may be controlled by a fleet management system. The fleet manager configures what users shall have access to what vehicle. The user does not need to do a manual pairing to the vehicle **100** like what is needed for Voice and Call over Bluetooth. In other words, it is possible for the first communication system **103, 500** to connect to the vehicle **100** without having been connected before.

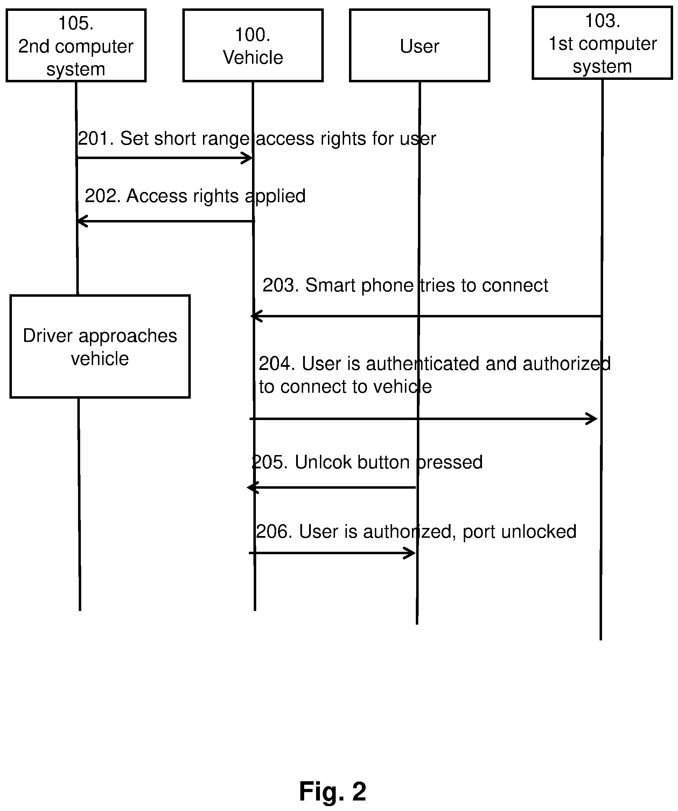

**FIG. 2** is an exemplary signaling diagram illustrating a method according to an example. The method comprises at least one of the following steps, which steps may be performed in any suitable order than described below. At start of the method, the charge cord **110** is connected to the charging inlet **108,** and the charging inlet **108** is locked, i.e. it is in a locked state, such that the charge cord **110** cannot be removed from the charging inlet **108.**

Step **201:** A fleet manager may set short-range access rights for a user by providing information indicating the short-range access rights of the user. The information is provided from the fleet manager system to the vehicle **100,** i.e. the second communication system **105, 500.** The user is a user of the vehicle **100,** for example a driver of vehicle **100.**

Step **202:** The vehicle **100,** i.e. the second communication system **105, 500,** applies the short-range access rights and provides a confirmation of the applied access rights to the fleet manager, i.e. to the fleet manager system.

Step **203:** When the user approaches the vehicle **100,** the user's mobile phone, i.e. the first communication system **103, 500** tries to automatically connect to the vehicle **100,** i.e. the first communication system **103, 500** tries to connect to the second communication system **105, 500.** This may be done by sending a request for connection from the user's mobile phone to the vehicle **100.** The request for connection may be sent automatically without involvement from the user

Step **204:** The vehicle **100** checks if the user of the smart phone is authorized to connect. If so, the vehicle **100** will automatically authorize charge port unlock without the user having to do anything. In other words, the vehicle **100** performs an authentication and authorization of the user to connect to the vehicle **100,** i.e. to connect to the second communication system **105, 500.** The vehicle **100** provides information about the authentication and authorization to the user's mobile phone.

Step **205:** The user tries to unlock the charging inlet **108** by pressing an unlock button or stop button. The unlock button or stop button may be located in proximity to the charging inlet **108** or on the charging inlet **108.**

Step **206:** The vehicle **100** detects that the user is authorized to access the charging inlet **108** and unlocks the charging inlet **108,** i.e. changes from locked state to unlocked state. When the charging inlet **108** is unlocked, the charge cord can be removed from the chare inlet **108.** Unlocking the charging inlet **108** may comprise that an actuator comprised in the vehicle **100** activates unlocking of the charging inlet **108.** Thus, authorization to access the charging inlet **108** may be given to the user without having the need for having physical key or key-fob, which may be a security risk. The physical key or key-fob typically gives access to the vehicle cab, which is a security risk. It may be the case that the driver shall only have access to the actual cab, and not necessarily to access the charging inlet **108.** With the present disclosure, it may be possible to provide certain users access to the charging inlet **108,** and consequently deny users to the charging inlet **108.**

When the vehicle **100** has granted the request for authorization to unlock the charging inlet **108**, information about the grant and the associated requester may be stored in any suitable storage medium, e.g. a local memory in the vehicle **100,** a cloud memory accessible by the vehicle **100,** just to mention some examples. When the information about the grant and the associated requester is stored, it is possible to track who has been granted authorization. For example, if the charging cable is not connected to the charging inlet **108** as it should be, the stored information may be used to track which requester that was latest authorized to access the charging inlet **108,** and this requester may be contacted in order to request information about the not connected charging cable.

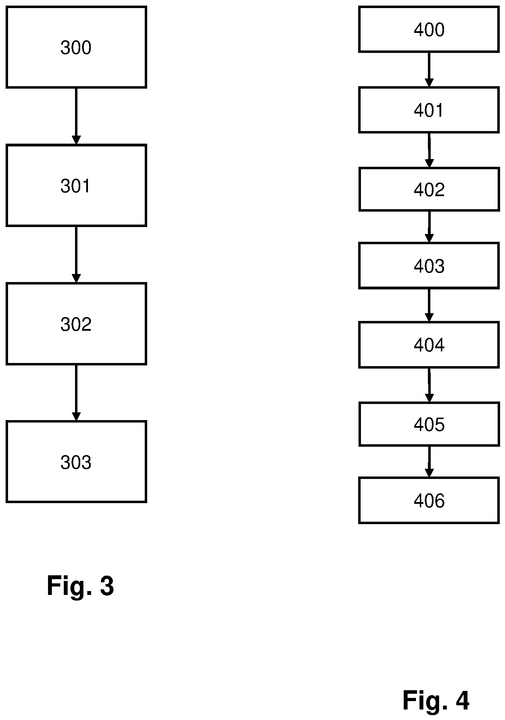

**FIG. 3** is an exemplary flow chart illustrating a method according to an example. In more detail, **FIG. 3** is an exemplary flow chart illustrating a first computer-implemented method for handling authorization to access a charging inlet 108 of a vehicle **100.** The authorization to access the charging inlet **108** may be for unlocking the charging inlet **108** so that the charge cord **110** can be removed from the charging inlet **108.** The first computer-implemented method may be performed by a processing circuitry of the first computer system **103, 500.** The first computer system **103, 500** may be comprised in a UE. The method comprises at least one of the following steps, which steps may be performed in any suitable order than described below:

Step **300:** A processing circuitry **502** of a first computer system **103, 500** may detect, via the short-range communication link **113,** that the first computer system **103, 500** is within the predetermined distance of vehicle **100.**

Step **301:** When the first computer system **103, 500** detects that it is within the predetermined distance of the vehicle **100,** the processing circuitry **502** of a first computer system **103, 500** may provide a request for authorization for the first computer system **103, 500** to access the charging inlet **108.** The request is provided to the second computer system **105, 500** over the short-range communication link **113.**

The request may be provided automatically when the first computer system **103, 500** detects that it is within a predetermined distance of the vehicle 100. The request may be provided with or without user interaction. The user interaction may comprise that the user activates an unlock button on the first computer system **103, 500.**

The request may comprise an ID of the first computer system **103, 500.** The ID of the first computer system **103, 500** may be any suitable ID.

The request may comprise a user ID of the user of the first computer system **103, 500.** The user ID of the user of the first computer system **103** may be any suitable ID.

Step **302:** This step corresponds to step 204 in **FIG. 2****.** A processing circuitry **502** of a first computer system **103, 500** obtains, from a second computer system **105, 500,** information indicating that the first computer system **103, 500** is authorized to access the charging inlet **108** of vehicle **100.** The obtained information may indicate that a user of the first computer system **103, 500** is authorized to access the charging inlet **108** of vehicle **100.** Thus, it may be the first computer system **103, 500** and/or the user that may be authorized, i.e. trusted, to access the charging inlet **108.** It may be an ID that is associated with the first computer system **103, 500** that is authorized to access the charging inlet **108,** and the ID may be of the first computer system **103, 500** or the user of the first computer system **103, 500.**

The authorization is obtained when the first computer system **103, 500** is within a predetermined distance of vehicle **100.** The first computer system **103, 500** and the second computer system **105, 500** are connected to each other via a short-range communication link **113.**

Step **303:** When the authorization has been obtained, the processing circuitry **502** of a first computer system **103, 500** may provide a trigger to unlock the charging inlet **108.** The trigger to unlock the charging inlet **108** may be provided to the second computer system **105, 500,** e.g. to an actuator comprised in the vehicle **100** which automatically unlocks the charging inlet **108,** i.e. changes a state from a locked state to an unlocked state. The trigger may comprise instructions indicating that the state should change from locked to unlocked. When the charging inlet **108** has entered unlocked state, the charge cord **110** may be removed from the charging inlet **108.** The trigger may be provided via the short-range communication link **113.**

The trigger may be provided to a user interface comprised in or connected to the first computer system **103, 500,** and the trigger may comprise instructions to the user to press a stop button or an unlock button next to the charging inlet **108.** The instructions may be in the form of visual or textual instructions on the display, it may be audio instructions, etc.

The present disclosure relates to a first computer system **103, 500** for handling authorization to access a charging inlet **108** of a vehicle **100.** The first computer system **103, 500** is arranged to perform at least one step of the method of **FIG. 2** and/or **FIG. 3****.** The first computer system **103, 500** may be comprised in a UE.

The processing circuitry **502** may be further configured to detect, via the short-range communication link **113,** that the first computer system **103, 500** is within the predetermined distance of vehicle **100.**

The processing circuitry **502** may be further configured to, when the first computer system **103, 500** detects that it is within the predetermined distance of the vehicle **100,** provide a request for authorization for the first computer system **103, 500** to access the charging inlet **108.** The request may be provided to the second computer system **105, 500** over the short-range communication link **113.** The request may be for authorization of the user of the first computer system **103, 500** to access the charging inlet **108.** Thus, the request may be for the first computer system **103, 500** and/or the user to access the charging inlet **108.**

The request may be provided automatically when the first computer system **103, 500** detects that it is within a predetermined distance of the vehicle **100.** The request may be provided with or without user interaction. The user interaction may comprise that the user activates an unlock button on the first computer system **103, 500.**

The request may comprise an ID of the first computer system **103, 500.** The ID of the first computer system **103,** 500 may be any suitable ID.

The request may comprise a user ID of the user of the first computer system **103, 500.** The user ID of the user of the first computer system **103** may be any suitable ID.

The first computer system **103, 500** comprises processing circuitry **502** configured to obtain, from a second computer system **105, 500,** information indicating that the first computer system **103, 500** is authorized to access the charging inlet **108** of vehicle **100.** The obtained information may indicate that a user of the first computer system **103, 500** is authorized to access the charging inlet **108** of vehicle **100.** Thus, it may be the first computer system **103, 500** and/or the user that may be authorized, i.e. trusted, to access the charging inlet **108.** It may be an ID that is associated with the first computer system **103, 500** that is authorized to access the charging inlet **108,** and the ID may be of the first computer system **103, 500** or the user of the first computer system **103, 500.**

The authorization has been obtained when the first computer system **103, 500** is within a predetermined distance of vehicle **100.** The first computer system **103, 500** and the second computer system **105, 500** are configured to be connected to each other via a short-range communication link **113.**

The processing circuitry **502** may be further configured to, when the authorization has been obtained, provide a trigger to unlock the charging inlet **108.** The trigger to unlock the charging inlet **108** may be provided to the second computer system **105, 500,** e.g. to an actuator comprised in the vehicle **100** which unlocks the charging inlet **108,** i.e. changes a state from a locked state to an unlocked state. The trigger may comprise instructions indicating that the state should change from locked to unlocked. When the charging inlet **108** has entered unlocked state, the charge cord **110** may be removed from the charging inlet **108.** The trigger may be provided via the short-range communication link **113.**

The trigger may be provided to a user interface comprised in or connected to the first computer system **103, 500,** and the trigger may comprise instructions to the user to press a stop button or an unlock button next to the charging inlet **108.** The instructions may be in the form of visual or textual instructions on the display, it may be audio instructions, etc.

**FIG. 4** is an exemplary flow chart illustrating a method according to an example. In more detail, **FIG. 4** is an exemplary flow chart illustrating a second computer-implemented method for handling authorization to access a charging inlet 108 of a vehicle **100.** The authorization to access the charging inlet **108** may be for unlocking the charging inlet **108** so that the charge cord **110** can be removed from the charging inlet **108.** The second computer-implemented method may be performed by a processing circuitry of the second computer system **105, 500.** The second computer system **105, 500** may be comprised in the vehicle **100.** The method comprises at least one of the following steps, which steps may be performed in any suitable order than described below:

Step **401:** This step corresponds to step **203** in **FIG. 2****.** A processing circuitry **502** of a second computer system **105, 500** detects, via a short-range communication link **113,** that a first computer system **103, 500** is within a predetermined distance of vehicle **100.**

Step **402:** The processing circuitry **502** of a second computer system **105, 500** may obtain a request for authorization for the first computer system **103, 500** to access the charging inlet **108.** The request may be obtained from the first computer system **103, 500** over the short-range communication link **113.**

The request may comprise an ID of the first computer system **103, 500.** The ID of the first computer system **103, 500** may be any suitable ID.

The request may comprise a user ID of the user of the first computer system **103, 500.** The user ID of the user of the first computer system **103** may be any suitable ID.

Step **403:** This step corresponds to step 204 in **FIG. 2****.** When the first computer system **103, 500** has been detected to be within the predetermined distance of the vehicle **100,** the processing circuitry **502** of a second computer system **105, 500** determines if the first computer system **103, 500** is authorized to access the charging inlet **108.**

A user of the first computer system **103, 500** may be authorized to access the charging inlet **108.**

The first computer system **103, 500** may be authorized to access the charging inlet **108** when it is on a predetermined list of authorized systems. The predetermined list of authorized systems may be provided to the processing circuitry **502** of the second computer system **105, 500** at some earlier time instance, i.e. before step 402 is performed, or the predetermined list of authorized systems may be obtained by the processing circuitry **205** of the second computer system **105, 500** after step **401** has been performed, e.g. it may be obtained from a central storage memory, a cloud memory, another computer system etc.

The predetermined list of authorized systems may comprise IDs of the authorized systems, i.e. systems which have previously been authorized to access the charging inlet **108.** The ID of the first computer system **103, 500** may be compared with the IDs on the predetermined list, and the first computer system **103**, 500 is authorized if the ID is on the predetermined list.

The predetermined list of authorized systems may comprise user IDs of the authorized users, i.e. users which have previously been authorized to access the charging inlet **108.** The user ID of the current user may be compared with the user IDs on the predetermined list, and the user is authorized if the user ID is on the predetermined list.

Step **404:** This step corresponds to step 204 in **FIG. 2****.** When the first computer system **103, 500** has been determined to be authorized to access the charging inlet **108,** the processing circuitry **502** of a second computer system **105, 500** provides, to the first computer system **103, 500,** information indicating that the first computer system **103, 500** is authorized to access the charging inlet **108** of the vehicle **100.**

The provided information may indicate that a user of the first computer system **103, 500** is authorized to access the charging inlet **108** of vehicle **100.** Thus, it may be the first computer system **103, 500** and/or the user that may be authorized, i.e. trusted, to access the charging inlet **108.** It may be an ID that is associated with the first computer system **103, 500** that is authorized to access the charging inlet **108,** and the ID may be of the first computer system **103, 500** or the user of the first computer system **103, 500.**

Step **405:** The processing circuitry **502** of a second computer system **105, 500** may obtain a trigger for unlocking the charging inlet **108.** The trigger may be associated with the authorized computer system. The trigger may be obtained from the first computer system **103, 500.** The trigger may comprise instructions indicating that the state of the charging inlet **108** should change from locked to unlocked.

The trigger may be obtained by, for example an actuator comprised in the vehicle **100** which automatically unlocks the charging inlet **108,** i.e. changes a state from a locked state to an unlocked state. The trigger may comprise instructions indicating that the state should change from locked to unlocked. When the charging inlet **108** has entered unlocked state, the charge cord **110** may be removed from the charging inlet **108.** The trigger may be obtained via the short-range communication link **113.**

The trigger may be obtained via a user interface comprised in or connected to the first computer system **103, 500,** and the trigger may comprise instructions provided by the user which has pressed a stop button or an unlock button next to the charging inlet **108.**

Step **406:** The processing circuitry **502** of a second computer system **105, 500** may trigger unlocking of the charging inlet **108** when the trigger has been obtained. Triggering the unlocking may comprise that an actuator comprised in or connected to the charging inlet **108** unlocks the charging inlet **108,** i.e. changes from locked state to unlocked state. Consequently, the charging inlet **108** is unlocked and the charge cord **110** can be removed from the charging inlet **108.**

The present disclosure relates to a second computer system **105, 500** for handling authorization to access a charging inlet **108** of a **vehicle** 100. The second computer system **105, 500** is arranged to perform at least one step of the method of **FIG. 2** and/or **FIG. 4****.** The second computer system **105, 500** may be comprised in the vehicle **100.**

The second computer system **105, 500** comprises processing circuitry **502** configured to detect, via a short-range communication link **113,** that a first computer system **103, 500** is within a predetermined distance of vehicle **100.**

The processing circuitry **502** may be further configured to obtain a request for authorization for the first computer system **103, 500** to access the charging inlet **108.** The request may be obtained from the first computer system **103, 500** over the short-range communication link **113.**

A user of the first computer system **103, 500** may be authorized to access the charging inlet **108.**

The request may comprise an ID of the first computer system **103, 500.** The ID of the first computer system **103,** 500 may be any suitable ID.

The request may comprise a user ID of the user of the first computer system **103, 500.** The user ID of the user of the first computer system **103** may be any suitable ID.

The second computer system **105, 500** comprises processing circuitry **502** configured to, when the first computer system **103, 500** has been detected to be within the predetermined distance of the vehicle **100,** determine if the first computer system **103, 500** is authorized to access the charging inlet **108.**

The first computer system **103, 500** may be authorized to access the charging inlet **108** when it is on a predetermined list of authorized systems.

The predetermined list of authorized systems may be provided to the first computer system **103, 500** at some earlier time instance, the predetermined list of authorized systems may be obtained by the second computer system **105, 500** for example from a central storage memory, a cloud memory, another computer system etc.

The predetermined list of authorized systems may comprise IDs of the authorized systems, i.e. systems which have previously been authorized to access the charging inlet **108.** The ID of the first computer system **103, 500** may be compared with the IDs on the predetermined list, and the first computer system **103, 500** is authorized if the ID is on the predetermined list.

The predetermined list of authorized systems may comprise user IDs of the authorized users, i.e. users which have previously been authorized to access the charging inlet **108.** The user ID of the current user may be compared with the user IDs on the predetermined list, and the user is authorized if the user ID is on the predetermined list.

The second computer system **105, 500** comprises processing circuitry **502** configured to, when the first computer system **103, 500** has been authorized, provide, to the first computer system **103, 500,** information indicating that the first computer system **103, 500** is authorized to access the charging inlet **108** of the vehicle **100.**

The provided information may indicate that a user of the first computer system **103, 500** is authorized to access the charging inlet **108** of vehicle **100.** Thus, it may be the first computer system **103, 500** and/or the user that may be authorized, i.e. trusted, to access the charging inlet **108.** It may be an ID that is associated with the first computer system **103, 500** that is authorized to access the charging inlet **108,** and the ID may be of the first computer system **103, 500** or the user of the first computer system **103, 500.**

The processing circuitry **502** may be further configured to obtain a trigger for unlocking the charging inlet 108. The trigger may be associated with the authorized computer system. The trigger may be obtained from the first computer system **103, 500.** The trigger may comprise instructions indicating that the state of the charging inlet **108** should change from locked to unlocked.

The trigger may be obtained via a user interface comprised in or connected to the first computer system **103, 500,** and the trigger may comprise instructions provided by the user which has pressed a stop button or an unlock button next to the charging inlet **108.**

The processing circuitry **502** may be further configured to trigger unlocking of the charging inlet **108** when the trigger has been obtained. Triggering the unlocking may comprise that an actuator comprised in or connected to the charging inlet **108** unlocks the charging inlet **108,** i.e. changes from locked state to unlocked state. Consequently, the charging inlet **108** is unlocked and the charge cord **110** can be removed from the charging inlet **108.**

According to the present disclosure, the vehicle **100** comprises the second computer system 105, 500, the charging inlet **108** and an actuator.

A computer program product comprises program code for performing, when executed by a processing circuitry **502,** the method of **FIG. 2** and/or **FIG. 3** and/or **FIG. 4****.**

A non-transitory computer-readable storage medium comprises instructions, which when executed by a processing circuitry **502,** cause the processing circuitry **502** to perform the method of **FIG 2** and/or **FIG. 3** and/or **FIG. 4****.**

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A first computer system **103, 500** for handling authorization to access a charging inlet **108** of a vehicle **100,** wherein the first computer system **103, 500** comprises processing circuitry **502** configured to:
- obtain, from a second computer system **105, 500,** information indicating that the first computer system **103, 500** is authorized to access the charging inlet **108** of vehicle **100,**

wherein the authorization is obtained when the first computer system **103, 500** is within a predetermined distance of vehicle **100,** and
wherein the first computer system **103, 500** and the second computer system **105, 500** are connected to each other via a short-range communication link **113.**

Example 2: The first computer system **103, 500** of example 1, wherein the processing circuitry **502, 500** is further configured to:
- detect, via the short-range communication link **113,** that the first computer system **103, 500** is within the predetermined distance of vehicle **100;** and
- when the first computer system **103, 500** detects that it is within the predetermined distance of the vehicle **100,** provide a request for authorization for the first computer system **103, 500** to access the charging inlet **108,** wherein the request is provided to the second computer system **105, 500** over the short-range communication link **113.**

Example 3: The first computer system **103, 500** of example 2, wherein the request is provided automatically when the first computer system **103, 500** detects that it is within a predetermined distance of the vehicle **100;** and
wherein the request is provided with or without user interaction.

Example 4: The first computer system **103, 500** of any of the preceding examples, wherein the processing circuitry **502** is further configured to, when the authorization has been obtained, provide a trigger to unlock the charging inlet **108.**

Example 5: The first computer system **103, 500** of any of examples 2-4, wherein the request comprises an ID of the first computer system **103, 500.**

Example 6: The first computer system **103, 500** of any of examples 2-4, wherein the obtained information indicates that a user of the first computer system **103, 500** is authorized to access the charging inlet **108** of vehicle **100.**

Example 7: The first computer system **103, 500** of example 6, wherein the request comprises a user ID of the user of the first computer system **103, 500.**

Example 8: The first computer system **103, 500** of any of the preceding examples, wherein the first computer system **103, 500** is comprised in a UE.

Example 9: A second computer system **105, 500** for handling authorization to access a charging inlet **108** of a vehicle **100,** wherein the second computer system **105, 500** comprising processing circuitry **502** configured to:
- detect, via a short-range communication link **113,** that a first computer system **103, 500** is within a predetermined distance of vehicle **100;**
- when the first computer system **103, 500** is detected to be within the predetermined distance of the vehicle **100,** determine if the first computer system **103, 500** is authorized to access the charging inlet **108;** and
- when the first computer system **103, 500** is authorized, provide, to the first computer system **103, 500,** information indicating that the first computer system **103, 500** is authorized to access the charging inlet **108** of the vehicle **100.**

Example 10: The second computer system **105, 500** of example 9, wherein the first computer system **103, 500** is authorized to access the charging inlet **108** when it is on a predetermined list of authorized systems.

Example 11: The second computer system **105, 500** of any of examples 9-10, wherein the processing circuitry **502** is further configured to:
- obtain a request for authorization for the first computer system **103, 500** to access the charging inlet **108,** wherein the request is obtained from the first computer system **103, 500** over the short-range communication link **113.**

Example 12: The second computer system **105, 500** of any of examples 9-11, wherein the processing circuitry **502** is further configured to:
- obtain a trigger for unlocking the charging inlet **108,** wherein the trigger is associated with the authorized computer system; and to
- trigger unlocking of the charging inlet **108** when the trigger has been obtained.

Example 13: The second computer system **105, 500** of any of examples 9-12, wherein the request comprises an ID of the first computer system **103, 500.**

Example 14: The second computer system **105, 500** of any of examples 9-13, wherein a user of the first computer system **103, 500** is authorized to access the charging inlet **108.**

Example 15: The first computer system **103, 500** of example 14, wherein the request comprises a user ID of the user of the first computer system **103, 500.**

Example 16: The second computer system **105, 500** of any of examples 9-15, wherein the second computer system **105, 500** is comprised in the vehicle **100.**

Example 17: A vehicle **100** comprising the second computer system **105, 500** of any of examples 9-16, a charging inlet **108** and an actuator.

Example 18: A first computer-implemented method for handling authorization to access a charging inlet **108** of a vehicle **100,** the method comprising:
- *obtaining* **204, 302,** by a processing circuitry **502** of a first computer system **103, 500** and from a second computer system **105, 500,** information indicating that the first computer system **103, 500** is authorized to access the charging inlet **108** of vehicle **100,**

wherein the authorization is obtained when the first computer system **103, 500** is within a predetermined distance of vehicle **100,** and
wherein the first computer system **103, 500** and the second computer system **105, 500** are connected to each other via a short-range communication link **113.**

Example 19: A second computer-implemented method for handling authorization to access a charging inlet **108** of a vehicle **100,** the method comprising:
- *detecting* **203, 401,** by a processing circuitry **502** of a second computer system **105, 500** and via a short-range communication link **113,** that a first computer system **103, 500** is within a predetermined distance of vehicle **100;** and
- when the first computer system **103, 500** is detected to be within the predetermined distance of the vehicle **100,** *determining* **204, 402,** by the processing circuitry **502,** if the first computer system **103, 500** is authorized to access the charging inlet **108;** and
- when the first computer system **103, 500** is determined to be authorized to access the charging inlet **108,** *providing* **204, 403,** by the processing circuitry **502** and to the first computer system **103, 500,** information indicating that the first computer system **103, 500** is authorized to access the charging inlet **108** of the vehicle **100.**

Example 20: A computer program product comprising program code for performing, when executed by a processing circuitry **502,** the method of example 18 and/or example 19.

Example 21: A non-transitory computer-readable storage medium comprising instructions, which when executed by a processing circuitry **502,** cause the processing circuitry **502** to perform the method of example 18 and/or example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A first computer system (103, 500) for handling authorization to access a charging inlet (108) of a vehicle (100), wherein the first computer system (103, 500) comprises processing circuitry (502) configured to:
obtain, from a second computer system (105, 500), information indicating that the first computer system (103, 500) is authorized to access the charging inlet (108) of vehicle (100),
wherein the authorization has been obtained when the first computer system (103, 500) is within a predetermined distance of vehicle (100), and
wherein the first computer system (103, 500) and the second computer system (105, 500) are configured to be connected to each other via a short-range communication link (113).

2. The first computer system (103, 500) of claim 1, wherein the processing circuitry (502, 500) is further configured to:
detect, via the short-range communication link (113), that the first computer system (103, 500) is within the predetermined distance of vehicle (100); and
when the first computer system (103, 500) detects that it is within the predetermined distance of the vehicle (100), provide a request for authorization for the first computer system (103, 500) to access the charging inlet (108), wherein the request is provided to the second computer system (105, 500) over the short-range communication link (113).

3. The first computer system (103, 500) of claim 2, wherein the request is provided automatically when the first computer system (103, 500) detects that it is within a predetermined distance of the vehicle (100); and
wherein the request is provided with or without user interaction.

4. The first computer system (103, 500) of any of the preceding claims, wherein the processing circuitry (502) is further configured to:
when the authorization has been obtained, provide a trigger to unlock the charging inlet (108).

5. The first computer system (103, 500) of any of the preceding claims, wherein the first computer system (103, 500) is comprised in a User Equipment, UE.

6. A second computer system (105, 500) for handling authorization to access a charging inlet (108) of a vehicle (100), wherein the second computer system (105, 500) comprising processing circuitry (502) configured to:
detect, via a short-range communication link (113), that a first computer system (103, 500) is within a predetermined distance of vehicle (100);
when the first computer system (103, 500) has been detected to be within the predetermined distance of the vehicle (100), determine if the first computer system (103, 500) is authorized to access the charging inlet (108); and
when the first computer system (103, 500) has been authorized, provide, to the first computer system (103, 500), information indicating that the first computer system (103, 500) is authorized to access the charging inlet (108) of the vehicle (100).

7. The second computer system (105, 500) of claim 6, wherein the first computer system (103, 500) is authorized to access the charging inlet (108) when it is on a predetermined list of authorized systems.

8. The second computer system (105, 500) of any of claims 6-7, wherein the processing circuitry (502) is further configured to:
obtain a request for authorization for the first computer system (103, 500) to access the charging inlet (108), wherein the request is obtained from the first computer system (103, 500) over the short-range communication link (113).

9. The second computer system (105, 500) of any of claims 6-8, wherein the processing circuitry (502) is further configured to:
obtain a trigger for unlocking the charging inlet (108), wherein the trigger is associated with the authorized computer system; and to
trigger unlocking of the charging inlet (108) when the trigger has been obtained.

10. The second computer system (105, 500) of any of claims 6-9, wherein the second computer system (105, 500) is comprised in the vehicle (100).

11. A vehicle (100) comprising the second computer system (105, 500) of any of claims 6-9, a charging inlet (108) and an actuator.

12. A first computer-implemented method for handling authorization to access a charging inlet (108) of a vehicle (100), the method comprising:
*obtaining* (204, 302), by a processing circuitry (502) of a first computer system (103, 500) and from a second computer system (105, 500), information indicating that the first computer system (103, 500) is authorized to access the charging inlet (108) of vehicle (100),
wherein the authorization is obtained when the first computer system (103, 500) is within a predetermined distance of vehicle (100), and
wherein the first computer system (103, 500) and the second computer system (105, 500) are connected to each other via a short-range communication link (113).

13. A second computer-implemented method for handling authorization to access a charging inlet (108) of a vehicle (100), the method comprising:
*detecting* (203, 401), by a processing circuitry (502) of a second computer system (105, 500) and via a short-range communication link (113), that a first computer system (103, 500) is within a predetermined distance of vehicle (100); and
when the first computer system (103, 500) has been detected to be within the predetermined distance of the vehicle (100), *determining* (204, 403), by the processing circuitry (502), if the first computer system (103, 500) is authorized to access the charging inlet (108); and
when the first computer system (103, 500) has been determined to be authorized to access the charging inlet (108), *providing* (204, 404), by the processing circuitry (502) and to the first computer system (103, 500), information indicating that the first computer system (103, 500) is authorized to access the charging inlet (108) of the vehicle (100).

14. A computer program product comprising program code for performing, when executed by a processing circuitry (502), the method of claim 12 and/or claim 13.

15. A non-transitory computer-readable storage medium comprising instructions, which when executed by a processing circuitry (502), cause the processing circuitry (502) to perform the method of claim 12 and/or claim 13.
